# EUROPEAN PATENT APPLICATION

(11) **EP 4 524 721 A2**
(43) Date of publication of application: **19.03.2025**
(21) Application number: 24223398.9
(22) Date of filing: 27.12.2024
(51) Int. Cl.: G06F 7/544, G06F 17/15

(54) **METHOD AND APPARATUS FOR IMPLEMENTING CONVOLUTION OPERATION THROUGH CALCULATION CIRCUIT, MEDIUM, AND DEVICE**

(30) Priority: 29.12.2023 CN 202311865382
(71) Applicant: Beijing Horizon Information Technology Co., Ltd., Beijing 100094 (CN)
(72) Inventor: XIAO, Lei, Beijing, 100094 (CN); HE, Yibo, Beijing, 100094 (CN); YUAN, Jiawei, Beijing, 100094 (CN)
(74) Representative: v. Bezold & Partner Patentanwälte - PartG mbB

(57) **Abstract**

Disclosed are a method and an apparatus for implementing a convolution operation through a calculation circuit, a medium, and a device. The method includes: determining a state type of the calculation circuit; determining a target data source based on the state type; providing target to-be-calculated data to the calculation circuit through the target data source; controlling a startup manner of the calculation circuit based on a control manner adapted to the state type; and according to the startup manner, performing a convolution operation on the target to-be-calculated data through the calculation circuit, to obtain an operation result. According to embodiments of this disclosure, stability of a power source of a chip can be ensured, thereby ensuring reliability of the chip.

## Description

### FIELD OF THE INVENTION

This disclosure relates to technologies of chips, and in particular, to a method and an apparatus for implementing a convolution operation through a calculation circuit, a medium, and a device.

### BACKGROUND OF THE INVENTION

Currently, application of chips becomes increasingly widespread. There is usually a calculation circuit in a chip. For example, there may be a calculation circuit in the chip for implementing convolution operations. In some cases, power consumption of the calculation circuit in the chip changes drastically, which easily causes significant changes in current and voltage of a local circuit. As a result, logic errors occur to the chip due to an unstable power source, which affects reliability of the chip.

### SUMMARY OF THE INVENTION

To resolve the foregoing technical problem, this disclosure provides a method and an apparatus for implementing a convolution operation through a calculation circuit, a medium, and a device, so as to ensure stability of power consumption of a calculation circuit in a chip, thereby ensuring stability of a power source, and thus ensuring reliability of the chip.

According to an aspect of an embodiment of this disclosure, a method for implementing a convolution operation through a calculation circuit is provided, including:
determining a state type of the calculation circuit;
determining a target data source based on the state type;
providing target to-be-calculated data to the calculation circuit through the target data source;
controlling a startup manner of the calculation circuit based on a control manner adapted to the state type; and
according to the startup manner, performing a convolution operation on the target to-be-calculated data through the calculation circuit, to obtain an operation result.

According to another aspect of an embodiment of this disclosure, an apparatus for implementing a convolution operation through a calculation circuit is provided, including:
a calculation circuit, including a plurality of calculation units;
a plurality of processing modules, wherein each processing module corresponds to one calculation unit in the calculation circuit and includes processing units and switching units, each switching unit has a plurality of working modes, and in different working modes, the switching unit enables communication between different data sources with the corresponding calculation unit; and
a control module, wherein the control module is configured to determine a state type of the calculation circuit; determine a target data source based on the state type; and set, by using each processing unit, the corresponding switching unit to be in a target working mode of enabling communication between the target data source with the corresponding calculation unit, so as to provide target to-be-calculated data to the calculation circuit through the target data source; the control module is further configured to control, by using each processing unit, a startup manner of the calculation circuit based on a control manner adapted to the state type; and the calculation circuit is configured to, according to the startup manner, perform a convolution operation on the target to-be-calculated data, to obtain an operation result.

According to still another aspect of an embodiment of this disclosure, a computer readable storage medium is provided, wherein the storage medium stores a computer program, and the computer program is used for implementing the method for implementing a convolution operation through a calculation circuit that is described above.

According to yet another aspect of an embodiment of this disclosure, an electronic device is provided, wherein the electronic device includes:
a processor; and
a memory, configured to store a processor-executable instruction, wherein
the processor is configured to read the executable instruction from the memory, and execute the instruction to implement the method for implementing a convolution operation through a calculation circuit that is described above.

According to a still yet another aspect of an embodiment of this disclosure, a computer program product is provided. When instructions in the computer program product are executed by a processor, the method for implementing a convolution operation through a calculation circuit that is described above is implemented.

According to the method and apparatus for implementing a convolution operation through a calculation circuit, the storage medium, the electronic device, and the product that are provided in the foregoing embodiments of this disclosure, in an aspect, the startup manner of the calculation circuit may be controlled based on the state type of the calculation circuit; and in another aspect, a proper data source may be selected based on the state type of the calculation circuit, to supply data to the calculation circuit. In this way, through the selection of the data source and the control of the startup manner, for scenarios in which the power consumption of the calculation circuit is prone to change drastically, data can be supplied to the calculation circuit constantly without causing significant transient loads, to maintain operations of the calculation circuit, and avoid unstable power consumption due to factors such as startup or data interruptions, thereby ensuring the stability of the power source of the chip, and thus ensuring the reliability of the chip.

### BRIEF DESCRIPTION OF THE DRAWINGS

FIG. 1 is an architecture diagram of a system for implementing a convolution operation according to some exemplary embodiments of this disclosure;
FIG. 2 is a schematic flowchart of a method for implementing a convolution operation through a calculation circuit according to some exemplary embodiments of this disclosure;
FIG. 3 is an envelope diagram illustrating that power consumption of a calculation circuit changes over time according to related technologies;
FIG. 4 is a schematic diagram of a structure of a calculation array according to some exemplary embodiments of this disclosure;
FIG. 5 is a conceptual diagram of a method for implementing a convolution operation through a calculation circuit according to some exemplary embodiments of this disclosure;
FIG. 6 is a schematic flowchart of a method for controlling a plurality of first calculation units to be started according to a preset mode, according to some exemplary embodiments of this disclosure;
FIG. 7 is a schematic flowchart of a method for providing target to-be-calculated data to a calculation circuit through a target data source according to some exemplary embodiments of this disclosure;
FIG. 8 is a schematic flowchart of a method for implementing a convolution operation through a calculation circuit according to some other exemplary embodiments of this disclosure;
FIG. 9 is a schematic diagram of a structure of an apparatus for implementing a convolution operation through a calculation circuit according to some exemplary embodiments of this disclosure;
FIG. 10 is a conceptual diagram of supplying data to a calculation circuit through a pseudo data source according to some exemplary embodiments of this disclosure;
FIG. 11 is an envelope diagram illustrating that power consumption of a calculation circuit changes over time according to some exemplary embodiments of this disclosure; and
FIG. 12 is a diagram of a structure of an electronic device according to some exemplary embodiment of this disclosure.

### DETAILED DESCRIPTION OF THE EMBODIMENTS

To explain this disclosure, exemplary embodiments of this disclosure are described below in detail with reference to accompanying drawings. Obviously, the described embodiments are merely a part, rather than all of embodiments of this disclosure. It should be understood that this disclosure is not limited by the exemplary embodiments.

It should be noted that unless otherwise specified, the scope of this disclosure is not limited by relative arrangement, numeric expressions, and numerical values of components and steps described in these embodiments.

### Application overview

There may be a calculation circuit for implementing a convolution operation in the chip. For ease of description, the calculation circuit for implementing the convolution operation is referred to as a calculation circuit herein after.

Generally, power consumption of the calculation circuit is not constant, but may vary. For example, in some cases, there is no calculation task that needs to be executed by the calculation circuit. Therefore, the calculation circuit does not perform a convolution operation, and thus maintaining extremely low power consumption. After a period of time, there is a calculation task that needs to be executed by the calculation circuit, and a convolution operation is performed on the calculation task normally. In this case, data throughput at the calculation circuit is high with high calculating density, and extremely high power consumption is maintained. After the convolution operation is normally performed on the calculation task for a period of time, the calculation circuit needs to temporarily stop working to wait for data output. In this case, power consumption is also different from that when the work is not stopped.

It should be noted that if the power consumption of the calculation circuit changes drastically, significant changes in current and voltage of a local circuit may be easily caused. As a result, logic errors occur to the chip due to an unstable power source, which affects reliability of the chip. Therefore, it is necessary to take certain measures to improve stability of the power consumption of the calculation circuit, so as to ensure stability of the power source, thereby ensuring the reliability of the chip.

### Exemplary system

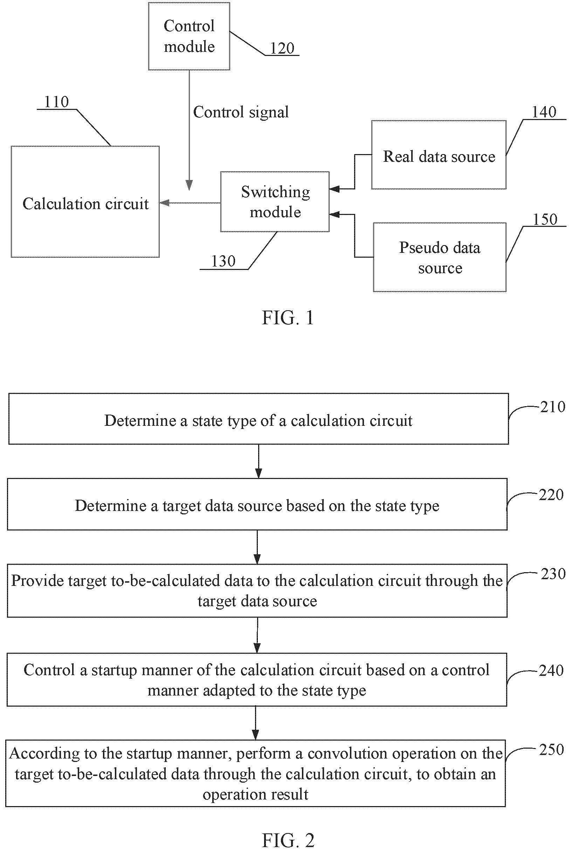

Referring to FIG. 1, FIG. 1 is an architecture diagram of a system for implementing a convolution operation according to some exemplary embodiments of this disclosure. As shown in FIG. 1, the system may include a calculation circuit 110, a control module 120, a switching module 130, a real data source 140, and a pseudo data source 150. The calculation circuit 110 may be located inside a chip. The control module 120 may be electrically connected to the calculation circuit 110 and the switching module 130, respectively.

Optionally, the real data source 140 may be used for providing real data, which may also be referred to as Real_data. Types of the real data may include, but are not limited to an image type and a feature map type. The real data source 150 may be located inside the chip on which the calculation circuit 110 is located. For example, the chip on which the calculation circuit 110 is located may include a double data rate synchronous dynamic random access memory (DDR SDRAM), which may also be referred to as DDR for short. The DDR may serve as the real data source 140. For another example, the chip on which the calculation circuit 110 is located may include a cache memory, which may serve as the real data source 140. Certainly, the real data source 140 may also be located outside the chip on which the calculation circuit 110 is located. This is not limited in this disclosure.

Optionally, the pseudo data source 150 may be used for providing pseudo data, which may also be referred to as Pattern_data. Similar to the types of the real data, types of the pseudo data may include, but are not limited to an image type and a feature map type. Similar to the real data source 140, the pseudo data source 150 may be located either inside or outside the chip on which the calculation circuit 110 is located.

Optionally, the switching module 130 may have at least two working states. In one working state, the switching module 130 may connect and conduct the real data source 140 to the calculation circuit 110, while disconnecting the pseudo data source 150 from the calculation circuit 110, so that the real data source 140 can transmit data to the calculation circuit 110, while the pseudo data source 150 cannot transmit data to the calculation circuit 110. In another working state, the switching module 130 may connect and conduct the pseudo data source 150 to the calculation circuit 110, while disconnecting the real data source 140 from the calculation circuit 110, so that the pseudo data source 150 can transmit data to the calculation circuit 110, while the real data source 140 cannot transmit data to the calculation circuit 110.

Optionally, the control module 120 may provide control signals to the calculation circuit 110 and the switching module 130, respectively. The control module 120 may control a startup manner of the calculation circuit 110 by providing the control signal to the calculation circuit 110. The control module 120 may control the switching module 130 to switch between the working states by providing the control signal to the switching module 130, so that a proper data source can supply data to the calculation circuit 110. In this way, for scenarios in which power consumption of the calculation circuit is prone to change drastically, data can be supplied to the calculation circuit constantly without causing significant transient loads, to maintain operations of the calculation circuit, and avoid unstable power consumption due to factors such as startup or data interruptions, thereby ensuring stability of a power source of the chip, and thus ensuring reliability of the chip.

### Exemplary method

Referring to FIG. 2, FIG. 2 is a schematic flowchart of a method for implementing a convolution operation through a calculation circuit according to some exemplary embodiments of this disclosure. The method shown in FIG. 2 may include steps 210, 220, 230, 240, and 250.

Step 210. Determine a state type of the calculation circuit.

It should be noted that the calculation circuit may include, but is not limited to the following states: (1) idle; (2) full load; (3) waiting; (4) switching from idle to full load; (5) switching from full load to waiting; (6) switching from waiting to full load; and (7) switching from full load to idle.

The state of "idle" may be understood as: The calculation circuit has no calculation task to execute. In the state of "idle", power consumption of the calculation circuit is extremely low.

The state of "full load" may be understood as: The calculation circuit executes calculation tasks in an orderly manner according to predetermined logic. At the calculation circuit, data preparation, data calculation, and result output are performed concurrently. In the state of "full load", the power consumption of the calculation circuit is extremely high.

The state of "waiting" may be understood as: The calculation circuit has a calculation task to execute, but pause for a short time due to some reasons. For example, in some cases, an insufficient bandwidth is provided to a calculation array. As a result, the calculation circuit needs to pause. In some other cases, the calculation array cannot perform result output quickly, resulting in data backpressure. As a result, the calculation circuit needs to pause. The power consumption of the calculation circuit in the state of "waiting" may be between the power consumption in the state of "idle" and the state of "full load".

Optionally, the state of "idle" may also be represented as Idle; the state of "full load" may also be expressed as Run; the state of "waiting" may also be represented as Stall; the state of "switching from idle to full load" may also be represented as Idle to Run or Idle2Run; the state of "switching from full load to waiting" may also be represented as Run to Stall or Run2Stall; the state of "switching from waiting to full load" may also be represented as Stall to Run or Stall2Run; and the state of "switching from full load to idle" may also be represented as Run to Idle or Run2Idle.

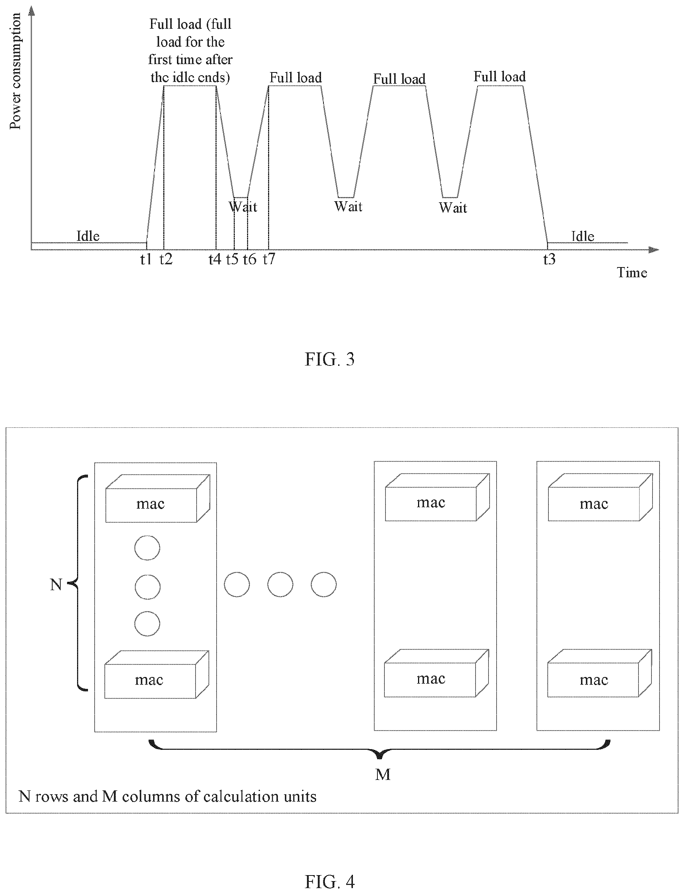

Referring to FIG. 3, FIG. 3 is an envelope diagram illustrating that power consumption of a calculation circuit changes over time according to related technologies. It may be learned from FIG. 3 that the calculation circuit generally may experience the following states sequentially: idle, switching from idle to full load, full load, switching from full load to waiting, waiting, switching from waiting to full load, full load, switching from full load to waiting, waiting, switching from waiting to full load, full load, ..., and idle.

In the embodiments of this disclosure, the calculation circuit may have two major state types, which respectively are a first preset type and a second preset type. The first preset type may represent the state type of switching from idle to full load, which may, for example, correspond to a time period from t1 to t2 in FIG. 3. The second preset type may include all possible state types that possibly occur after the calculation circuit is switched from idle to full load but before returning to idle, which may, for example, correspond to a time period from t2 to t3 in FIG. 3. The second preset type may include a plurality of preset subtypes. The plurality of preset subtypes may include a first preset subtype, a second preset subtype, and a third preset subtype. The first preset subtype may be a state type representing the switching from full load to waiting, which may, for example, correspond to a time period such as t4 to t5 in FIG. 3. The second preset subtype may be a state type representing the switching from waiting to full load, which may, for example, correspond to a time period such as t6 to t7 in FIG. 3. The third preset subtype may be a state type representing first full load after the idle ends, which may, for example, correspond to a time period from t2 to t4 in FIG. 3.

Optionally, the calculation circuit involved in step 210 may be a calculation circuit 110 in FIG. 1. In step 210, in combination with a bandwidth provided to the calculation circuit 110, an occupancy rate of a storage space in the calculation circuit 110, and other information related to the calculation circuit 110, a control module 120 in FIG. 1 may determine from when the calculation circuit starts switching from idle to full load, from when the calculation circuit starts switching from full load to waiting, and from when the calculation circuit starts maintaining the full load. In this way, the control module 120 can determine what state the calculation circuit 110 is about to be in, so as to obtain a state type for representing a state in which the calculation circuit 110 is about to be.

Step 220. Determine a target data source based on the state type.

It should be noted that, two types of data sources may be involved in the embodiments of this disclosure, one of which may be a real data source, such as a real data source 140 in FIG. 1; and the other type may be a pseudo data source, such as a pseudo data source 150 in FIG. 1.

Real data provided by the real data source is data that actually requires a convolution operation. An operation result obtained by performing the convolution operation on the real data is to be sent to a next-level input module. For example, the operation result obtained based on the convolution operation for the real data includes, but is not limited to environmental perception information of a vehicle, which may be used for autonomous driving tasks of the vehicle. Different from the real data source, the pseudo data source is an additional data source introduced in the embodiments of this disclosure to ensure stability of the power consumption of the calculation circuit. Pseudo data provided by the pseudo data source may be randomly generated data. An operation result obtained by performing a convolution operation on the pseudo data source may be directly discarded, and is not needed to be sent to the next-level input module.

After the state type is determined, one of the real data source and the pseudo data source may be selected based on a matching relationship between the state type and the target data source, to serve as the target data source.

Step 230. Provide target to-be-calculated data to the calculation circuit through the target data source.

If the target data source is the real data source, the real data source may be connected and conducted to the calculation circuit, so that the real data source can transmit data to the calculation circuit; and the pseudo data source may be disconnected from the calculation circuit, so that the pseudo data source cannot transmit data to the calculation circuit. In this case, the data from the real data source may be used as the target to-be-calculated data.

If the target data source is the pseudo data source, the pseudo data source may be connected and conducted to the calculation circuit, so that the pseudo data source can transmit data to the calculation circuit; and the real data source may be disconnected from the calculation circuit, so that the real data source cannot transmit data to the calculation circuit. In this case, the data from the pseudo data source may be used as the target to-be-calculated data.

Step 240. Control a startup manner of the calculation circuit based on a control manner adapted to the state type.

Optionally, the control manner adapted to the state type may refer to a control manner that is related to startup of the calculation circuit and can ensure the stability of the power consumption of the calculation circuit in a state represented by the state type. By controlling the startup manner of the calculation circuit, a calculation function of the calculation circuit may be made in an available state.

Step 250. According to the startup manner, perform a convolution operation on the target to-be-calculated data through the calculation circuit, to obtain an operation result.

As described above, step 240 is performed, so that the calculation function of the calculation circuit may be made in an available state. In this way, in step 250, the calculation circuit may perform a convolution operation on the target to-be-calculated data through multiply-accumulate logic to obtain the operation result. Optionally, types of the operation result may include a feature map type.

It should be noted that in some scenarios, the power consumption of the calculation circuits is prone to change drastically. Specifically, in the state of idle, the calculation circuit does not need to perform a convolution operation, and is not started. In the state of full load, the calculation circuit needs to perform a convolution operation, and has been started. In this case, when switching from idle to full load, the calculation circuit needs to be switched from being not started to being started, which may easily cause a sudden increase in power consumption. For details, reference may be made to changes in power consumption during the time period from t1 to t2 in FIG. 3. When switching from full load to waiting, the calculation circuit is switched from working at full capacity to short-term pausing, which may easily cause a sudden decrease in power consumption as compared to that in full load. For details, reference may be made to changes in power consumption during the time period from t4 to t5 in FIG. 3. Contrary to the case of switching from full load to waiting, when switching from waiting to full load, a sudden increase in the power consumption may be easily caused. For details, reference may be made to changes in power consumption during the time period from t6 to t7 in FIG. 3. Obviously, there are mainly two major types of scenarios where the power consumption of the calculation circuit is prone to change drastically, wherein one is related to startup, and the other is related to short-term pauses.

On this basis, in the embodiments of this disclosure, in an aspect, the startup manner of the calculation circuit may be controlled based on the state type of the calculation circuit; and in another aspect, a proper data source may be selected based on the state type of the calculation circuit, to supply data to the calculation circuit. For example, in the case that the real data source does not have real data that can be supplied to the calculation circuit, or that the real data source has the real data that can be supplied to the calculation circuit but the state type of the calculation circuit does not match the real data source, the calculation circuit may be set in a computable state through control of the startup manner, without causing a large transient load, moreover, data may be supplied to the calculation circuit through the pseudo data source, so that the calculation circuit in the computable state performs a convolution operation by using the data from the pseudo data source. In the case that the real data source has the real data that can be supplied to the calculation circuit and the state type of the calculation circuit matches the real data source, the calculation circuit may be set in a computable state through the control of the startup manner , without causing a large transient load. Moreover, data may be supplied to the calculation circuit through the real data source, so that the calculation circuit in the computable state performs a convolution operation by using the data from the real data source. In this way, through the selection of the data source and the control of the startup manner, for scenarios in which the power consumption of the calculation circuit is prone to change drastically, data can be supplied to the calculation circuit constantly without causing significant transient loads, to maintain operations of the calculation circuit, and avoid unstable power consumption due to factors such as startup or data interruptions, thereby ensuring stability of a power source of the chip, and thus ensuring reliability of the chip.

Embodiments are described in detail below based on the foregoing method.

In some optional examples, step 240 may include:
in response to that the state type is a first preset type, determining a plurality of first calculation units that need to participate in the operation from the calculation circuit, and controlling the plurality of first calculation units to be started according to a preset mode; and
in response to that the state type is a second preset type, determining a plurality of second calculation units that need to participate in the operation from the calculation circuit, and controlling the plurality of second calculation units to remain in a startup state.

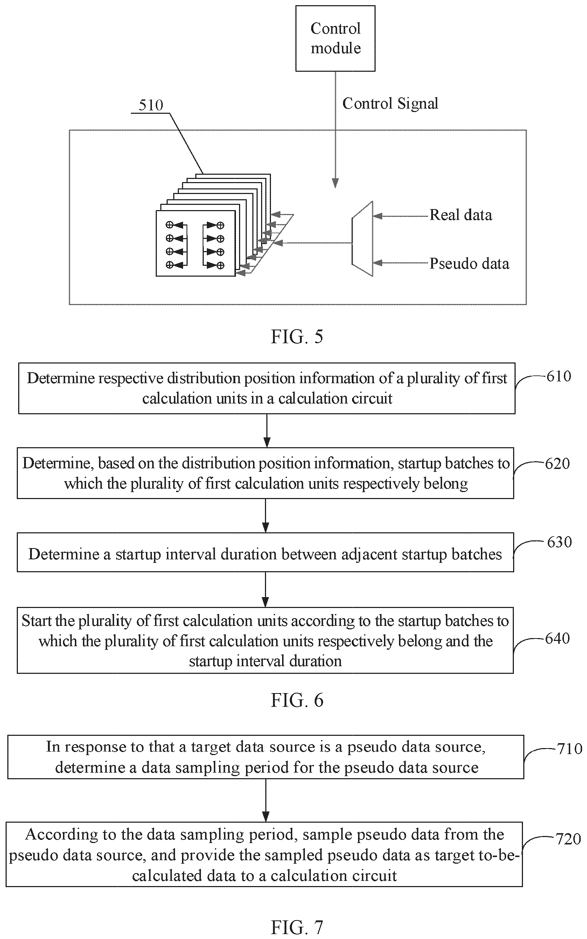

Optionally, the calculation circuit may include a plurality of calculation units. The calculation circuit may also be referred to as a calculation array. In an example, as shown in FIG. 4, a calculation circuit may have N rows and M columns of calculation units. In other words, the calculation circuit may include N*M calculation units. Each one in the N*M calculation units may be referred to as a mac. For structural composition of each mac, reference may be made to FIG. 5. As shown in FIG. 5, each mac includes 8 calculation subunits 510.

In the embodiments of this disclosure, in the case that the determined state type is the first preset type, that is, the calculation circuit is about to be switched from idle to full load, a plurality of first calculation units that need to participate in the operation may be determined from the N*M calculation units included in the calculation circuit. Optionally, each one in the N*M calculation units included in the calculation circuit may be used as a first calculation unit. Thus, the plurality of determined first calculation units that need to participate in the operation may be N*M first calculation units. Certainly, a quantity of the first calculation units is not limited to N*M, and may also be less than N*M.

After the plurality of first calculation units that need to participate in the operation are determined, the plurality of first calculation units may be controlled to be started according to the preset mode. Optionally, the preset mode may be a mode of staring in batches. In this way, as shown in FIG. 6, controlling the plurality of first calculation units to be started according to the preset mode may include steps 610, 620, 630, and 640.

Step 610. Determine respective distribution position information of the plurality of first calculation units in the calculation circuit.

As described above, the calculation circuit may include N rows and M columns of calculation units. In this case, the distribution position information of any first calculation unit in the calculation circuit may include, but is not limited to a row number of a row in which the first calculation unit is located and a column number of a column in which the first calculation unit is located.

Step 620. Determine, based on the distribution position information, startup batches to which the plurality of first calculation units respectively belong.

Optionally, based on the respective distribution position information of the first calculation units in the calculation circuit, a startup batch to which the first calculation units in a first row in the calculation circuit belong may be determined as a first batch, a startup batch to which the first calculation units in a second row in the calculation circuit belong may be determined as a second batch, ..., and a startup batch to which the first calculation units in an N^{th} row in the calculation circuit belong may be determined as an N^{th} batch.

The case of determining the startup batch to which the first calculation unit belongs based on the row in which the first calculation unit is located is described in the previous paragraph. In specific implementation, the startup batch to which the first calculation unit belongs may also be determined based on a column in which the first calculation unit is located, or may be determined by combining the row and the column in which the first calculation unit is located.

Step 630. Determine a startup interval duration between adjacent startup batches.

In some optional implementations of this disclosure, preset duration may be directly determined as the startup interval duration.

It should be noted that in some embodiments, it is required to flexibly set the startup interval duration. For example, in some cases, a quantity of the plurality of first calculation units is relatively large, and the plurality of first calculation units may result in great total power consumption. To maintain the stability of the power consumption of the calculation circuit as much as possible, the startup interval duration may be set larger. In some other cases, a quantity of the plurality of first calculation units is not too large, and the plurality of first calculation units may result in small total power consumption. In this case, the startup interval duration may be set smaller.

In this way, in some other optional implementations of this disclosure, step 530 may include:
determining to-be-calculated data from a real data source;
determining task feature information of a calculation task to which the to-be-calculated data belongs; and
determining the startup interval duration between the adjacent startup batches based on the task feature information.

Optionally, the to-be-calculated data determined from the real data source may be a local image in a complete image, or may be a local feature map in a complete feature map. The calculation task to which the to-be-calculated data belongs may be a task for calculating the complete image or the complete feature map. The task feature information of the calculation task may include, but is not limited to task complexity and a task data volume. The task complexity may be associated with a quantity of channels of a convolution kernel that is used for convolution calculations. For example, more channels in the convolution kernel indicate higher task complexity. The task data volume may be associated with an image size of the complete image or a feature map size of the complete feature map. For example, a larger image size indicates a greater task data volume.

It should be noted that the implementations are applicable to situations wherein the real data source has real data that can be supplied to the outside.

Optionally, a quantity of the first calculation units that need to participate in the operation to execute the calculation task to which the to-be-calculated data belongs may be determined based on the task feature information, and the startup interval duration may be determined based on the quantity of the first calculation units. Generally, the quantity of the first calculation units may be positively correlated with the task data volume of the calculation task, and/or may be positively correlated with the task complexity of the calculation task. The startup interval duration may also be positively correlated with the quantity of the first calculation units.

In an optional example, an independent variable may be preset to serve as a task-complexity evaluation value; a dependent variable may serve as a first function for a quantity of the calculation units; and an independent variable may be set to serve as the quantity of the calculation units. The dependent variable is a second function for the interval duration. The task feature information may include the task complexity, which may be represented by using a numerical value. By using this value as a value for an independent variable of the first function for operations, a corresponding value for a corresponding dependent variable may be obtained, which may be used as the quantity of the first calculation units. By using the quantity of the first calculation units as a value for an independent variable of the second function for operations, a corresponding value for a corresponding dependent variable may be obtained, which may be used as the startup interval duration.

It should be noted that the calculation task to which the to-be-calculated data in the real data source belongs may be considered as a task that actually needs to be calculated. In the implementations, the startup interval duration may be adaptively determined based on actual characteristics (that is, task characteristic information) of the task that actually needs to be calculated. This helps to ensure rationality of the determined startup interval duration. For example, when there are more first calculation units, the startup interval duration may be set larger, that is, the interval is prolonged; and when there are fewer first calculation units, the startup interval duration may be set smaller. In this way, startup efficiency can be improved as much as possible while the stability of the power consumption of the calculation circuit is ensured.

Step 640. Start the plurality of first calculation units according to the startup batches to which the plurality of first calculation units respectively belong and the startup interval duration.

Optionally, the first calculation units in the plurality of first calculation units that belong to the first batch may be started at a certain moment (such as a moment T0); after a startup interval duration T, the first calculation units in the plurality of first calculation units that belong to the second batch may be started; and after another startup interval duration T, the first calculation units in the plurality of first calculation units that belong to the third batch may be started. The others may be obtained by analogy, until the plurality of first calculation units are all started. In this way, if the plurality of first calculation units are classified into M batches, total duration required for starting the plurality of first calculation units may be (M-1)*T. After the plurality of first calculation units are all successfully started, the state type of the calculation circuit may be the third preset subtype. For details, reference may be made to the time period from t2 to t4 in FIG. 3.

In embodiments shown in FIG. 6, the plurality of first calculation units may be started in batches by referring to respective distribution positions thereof in the calculation circuit and the startup interval duration. To be specific, the plurality of first calculation units are not started simultaneously, but are started slowly in a tiered manner. In this way, the power consumption of the calculation circuit changes slowly rather than drastically. Therefore, the stability of the power consumption of the calculation circuit can be better ensured.

In the embodiments of this disclosure, when the determined state type is the second preset type, for which, reference may be made to the time period from t2 to t3 in FIG. 3, a plurality of second calculation units that need to participate in the operation may be determined from the N*M calculation units included in the calculation circuit. Optionally, each one in the N*M calculation units included in the calculation circuit may be used as a second calculation unit. Thus, the plurality of determined second calculation units that need to participate in the operation may be N*M second calculation units. Certainly, a quantity of the second calculation units is not limited to N*M, and may also be less than N*M. It should be noted that in the embodiments of this disclosure, the first calculation units and the second calculation units are all calculation units used in the calculation circuit for implementing the convolution operation, having no essential difference. A distinction in names is merely for convenience of describing the two cases wherein the determined state type is the first preset type and the second preset type.

After the plurality of second calculation units that need to participate in the operation are determined, the plurality of second calculation units may be controlled to remain in the startup state. In this way, during the processes in which the calculation circuit is switched from full load to waiting and is switched from waiting to full load, the plurality of second calculation units can keep performing the convolution operation without pausing the operation. Therefore, the power consumption of the calculation circuit would not decrease or increase suddenly, so that the stability of the power consumption of the calculation circuit can be better ensured.

In the embodiments of this disclosure, if the calculation circuit needs to be started, a strategy of starting in batches may be adopted, so as to avoid a significant transient load caused by instantaneous startup, thereby ensuring the stability of the power consumption of the calculation circuit. If the calculation circuit has already been started and needs to switch from full load to the waiting state or switch from waiting to the full load state during the operation, the calculation circuit may be still kept in the calculation state through the control signal, to avoid unstable voltage and current caused by constant switching between an operation state and the waiting state of the calculation circuit, which causes logic errors to the chip.

In some optional examples, step 220 may include:
in response to that the state type is a first preset type or a first preset subtype in a second preset type, taking a pseudo data source as the target data source;
in response to that the state type is a second preset subtype in the second preset type, taking a real data source as the target data source; and
in response to that the state type is a third preset subtype in the second preset type, determining a data supply state of the real data source, and selecting a data source adapted to the data supply state from the real data source and the pseudo data source to serve as the target data source.

If the determined state type is the first preset type or the first preset subtype in the second preset type, that is, the calculation circuit is about to be switched from idle to full load or is about to be switched from full load to waiting, the pseudo data source may be used as the target data source to supply data to the calculation circuit through the pseudo data source. In this way, during the process in which the calculation circuit is switched from idle to full load, as the plurality of first calculation units are started in batches, the started first calculation units can perform convolution operations by using the data from the pseudo data source, so that the power consumption of the calculation circuit increases slowly. Thus, the stability of the power consumption of the calculation circuit can be ensured. During the process in which the calculation circuit is switched from full load to waiting, the plurality of second calculation units remain in the startup state, and the plurality of second calculation units in the startup state can perform convolution operations by using the data from the pseudo data source, so that the power consumption of the calculation circuit would not decreases suddenly as compared to that in the full load state. Thus, the stability of the power consumption of the calculation circuit can be ensured.

If the determined state type is the second preset subtype in the second preset type, that is, the calculation circuit is about to be switched from waiting to full load, the real data source may be used as the target data source. During the process in which the calculation circuit is switched from waiting to full load, the plurality of second calculation units remain in the startup state, and the plurality of second calculation units in the startup state can perform convolution operations by using the data from the real data source. Thus, not only the calculation circuit can be enabled to execute the task that actually needs to be calculated, but also the stability of the power consumption of the calculation circuit can be ensured.

If the determined state type is the third preset subtype in the second preset type, that is, the calculation circuit is about to enter full load for the first time after the idle ends, for which, reference may be made to the time period from t2 to t4 in FIG. 3, the plurality of second calculation units may remain in the startup state. It should be noted that when the calculation circuit enters full load for the first time after the idle ends, the real data source may or may not contain real data. For example, at a moment t2 in FIG. 3, there may be real data in the real data source. Alternatively, at the moment t2 in FIG. 3, there is no real data in the real data source, and the real data source begins to have real data until a certain intermediate moment in the time period from t2 to t4. In view of the above, the data supply state of the real data source may be determined, which may be used to indicate whether there is any data in the real data source that can be supplied to the outside. If the data supply state is used to indicate that there is data in the real data source that can be supplied to the outside, the real data source may be used as the target data source, so that the calculation circuit quickly starts executing the task that actually needs to be calculated. If the data supply state is used to indicate that there is no data in the real data source that can be supplied to the outside, the pseudo data source may be used as the target data source. Once the data that can be supplied to the outside starts to appear in the real data source, the calculation circuit can be enabled to quickly start executing the task that actually needs to be calculated merely by switching the target data source from the pseudo data source to the real data source.

In the embodiments of this disclosure, the determined state type can provide much effective reference for determining of the target data source, thereby ensuring rationality of the determined target data source. This can not only ensure the stability of the power consumption of the calculation circuit, but can also ensure rapid execution of the task that actually needs to be calculated as much as possible.

Referring to FIG. 7, FIG. 7 is a schematic flowchart of a method for providing target to-be-calculated data to a calculation circuit through a target data source according to some exemplary embodiments of this disclosure. The method shown in FIG. 7 may include steps 710 and 720. Optionally, a combination of steps 710 and 720 may be used as an optional implementation of step 230 in this disclosure.

Step 710. In response to that the target data source is a pseudo data source, determine a data sampling period for the pseudo data source.

In some optional implementations of this disclosure, step 710 may include:
determining to-be-calculated data from a real data source;
determining task feature information of a calculation task to which the to-be-calculated data belongs; and
determining the data sampling period for the pseudo data source based on the task feature information.

It should be noted that, for a manner for determining the data sampling period, reference may be made to the manner for determining the startup interval duration that is described above, and details are not described herein.

It should be noted that the calculation task to which the to-be-calculated data in the real data source belongs may be considered as the task that actually needs to be calculated. In the implementations, the data sampling period may be adaptively determined based on the actual characteristics (that is, the task characteristic information) of the task that actually needs to be calculated. This helps to ensure rationality of the determined data sampling period.

Step 720. According to the data sampling period, sample pseudo data from the pseudo data source, and provide the sampled pseudo data as the target to-be-calculated data to the calculation circuit.

In the embodiments of this disclosure, the pseudo data is sampled from the pseudo data source according to the data sampling period, and the pseudo data is provided to the calculation circuit. The data sampling period can determine a data acquisition frequency of the calculation circuit, and control a data toggling rate at the calculation circuit, so as to control the power consumption of the calculation circuit. For example, a shorter data sampling period indicates a higher data acquisition frequency and a higher data toggling rate. In this case, more data needs to be calculated by the calculation circuit during same duration, and correspondingly, the power consumption of the calculation circuit is greater. Therefore, by controlling the data sampling period, power consumption of the calculation array can be finely controlled, so that the power consumption of the calculation array can be effectively controlled according to actual requirements.

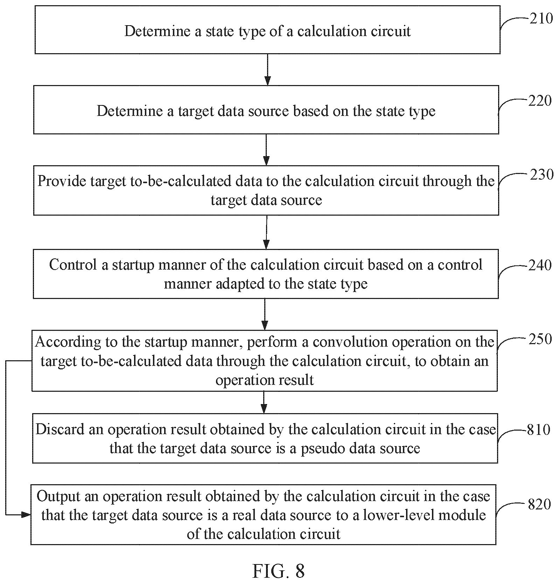

Referring to FIG. 8, FIG. 8 is a schematic flowchart of a method for implementing a convolution operation through a calculation circuit according to some other exemplary embodiments of this disclosure. In addition to the steps 210, 220, 230, 240, and 250 described above, the method shown in FIG. 8 may include steps 810 and 820.

Step 810. Discard an operation result obtained by the calculation circuit when the target data source is the pseudo data source.

Optionally, the operation result obtained by the calculation circuit when the target data source is the pseudo data source may be discarded periodically or irregularly.

Step 820. Output an operation result obtained by the calculation circuit in the case that the target data source is the real data source to a lower-level module of the calculation circuit.

Optionally, the lower-level module of the calculation circuit may be located in the chip where the calculation circuit is located. The lower-level module of the calculation circuit may be configured to perform further operations on the operation result obtained by the calculation circuit in the case that the target data source is the real data source, such as performing a pooling operation and rectifying a linear unit (rectified linear unit, ReLU).

In the embodiments of this disclosure, operation results obtained based on the data provided by the pseudo data source may be discarded, so as to avoid adverse effects brought in by theses operation results, thereby ensuring security of the calculation circuit and even the chip. Operation results obtained based on the data provided by the real data source may be transmitted to the lower-level module, so that the lower-level module performs further computation, thereby ensuring normal operation of the chip.

In some optional implementations of this disclosure, in the time period from t1 to t2 in FIG. 3, the plurality of first calculation units may be determined, and may be controlled to be started in batches. Moreover, the pseudo data source is used as the target data source, so that the plurality of first calculation units can perform convolution operations by using the data provided by the pseudo data source. The plurality of second calculation units may be determined in the time period from t2 to t4 in FIG. 3. If it is assumed that the data that can be supplied to the outside always exists in the real data source, the plurality of second calculation units may be kept in the startup state, and the real data source is used as the target data source, so that the plurality of second calculation units can perform convolution operations by using the data provided by the real data source. In the time period from t4 to t5 and a time period from t5 to t6 in FIG. 3, the plurality of second calculation units may be kept in the startup state, and the pseudo data source may be used as the target data source. In the time period from t6 to t7 in FIG. 3, the plurality of second calculation units may be kept in the startup state, and the real data source may be used as the target data source. In this way, through the selection of the data source and the control of the startup manner, for scenarios in which the power consumption of the calculation circuit is prone to change drastically, data can be supplied to the calculation circuit constantly without causing significant transient loads, to maintain operations of the calculation circuit, and avoid unstable power consumption due to factors such as startup or data interruptions, thereby ensuring the stability of the power source of the chip, and thus ensuring the reliability of the chip.

### Exemplary apparatus

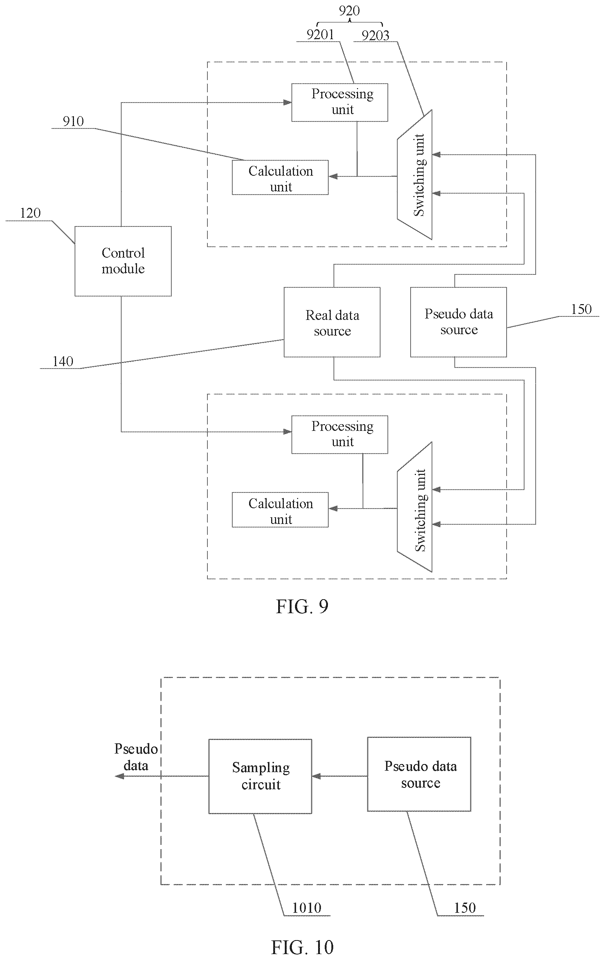

Referring to FIG. 9, FIG. 9 is a schematic diagram of a structure of an apparatus for implementing a convolution operation through a calculation circuit according to some exemplary embodiments of this disclosure. The apparatus shown in FIG. 9 may include:
a calculation circuit, including a plurality of calculation units 910;
a plurality of processing modules 920, wherein each processing module 920 corresponds to one calculation unit 910 in the calculation circuit and includes processing units 9201 and switching units 9203, each switching unit 9203 has a plurality of working modes, and in different working modes, the switching unit 9203 enables communication between different data sources and the corresponding calculation unit 910; and
a control module 120, wherein the control module 120 is configured to determine a state type of the calculation circuit; determine a target data source based on the state type; and set, by using each processing unit 9201, the corresponding switching unit 9203 to be in a target working mode of enabling communication between the target data source and the corresponding calculation unit 910, so as to provide target to-be-calculated data to the calculation circuit through the target data source; the control module 120 is further configured to control, by using each processing unit 9201, a startup manner of the calculation circuit based on a control manner adapted to the state type; and the calculation circuit is configured to, according to the startup manner, perform a convolution operation on the target to-be-calculated data, to obtain an operation result.

Optionally, the plurality of processing modules 920 may be in one-to-one correspondence to the plurality of calculation units 910.

Optionally, two types of data sources may be involved in the embodiments shown in FIG. 9, which respectively are a real data source 140 and a pseudo data source 150.

Optionally, for any one in the plurality of processing modules 920, the processing unit 9201 in the processing module 920 may be electrically connected to the calculation unit 910 corresponding to the processing module 920, and may also be electrically connected to the switching unit 9203 in the processing module 920. The switching unit 9203 may also be electrically connected to the calculation unit 910. The switching unit 9203 may have two working modes, which respectively are a first working mode and a second working mode. In the first working mode, the switching unit 9203 may connect and conduct the calculation unit 910 to the real data source 140. In second working mode, the switching unit 9203 may connect and conduct the calculation unit 910 to the pseudo data source 150. In an example, the switching unit 9203 may be switched between the first working mode and the second working mode through a circuit structure similar to a single pole double throw switch.

In the embodiments of this disclosure, after determining the state type of the calculation circuit, the control module 120 may determine the target data source based on the state type. For a specific determining manner, reference may be made to the foregoing relevant description, and details are not described herein. Subsequently, the control module 120 may send a control signal to each processing unit 9201, so that each processing unit 9201 performs a specific control action based on the control signal. In an aspect, each processing unit 9201 may set, based on the control signal, the corresponding switching unit 9203 in the target working mode of enabling communication between the target data source and the corresponding calculation unit 910. In the target working mode, the target data source may be connected and conducted to the calculation circuit, and may supply data to the calculation circuit. In another aspect, each processing unit 9201 may control the startup manner of the calculation circuit based on the control signal. For example, if the calculation circuit is about to be switched from idle to full load, each processing unit 9201 may determine a startup batch to which the corresponding calculation unit 910 belongs, and send a startup triggering signal to the corresponding calculation unit 910 at an appropriate moment based on the startup batch, so as to ensure that the plurality of calculation units 910 in the calculation circuit can be started according to a strategy of starting in batches.

In this way, through the selection of the pseudo data source and the control of the startup manner, for scenarios in which the power consumption of the calculation circuit is prone to change drastically, data can be supplied to the calculation circuit constantly without causing significant transient loads, to maintain operations of the calculation circuit, and avoid unstable power consumption due to factors such as startup or data interruptions, thereby ensuring stability of a power source of the chip, and thus ensuring reliability of the chip.

In some optional examples, as shown in FIG. 10, the apparatus provided in the embodiments of this disclosure may further include:
a sampling circuit 1010. The control module 120 in FIG. 9 is configured to send a sampling period indicator signal to the sampling circuit 1010. In response to that the target data source is the pseudo data source 150, the sampling circuit 1010 is configured to sample pseudo data from the pseudo data source according to a data sampling period for the pseudo data source 150 that is indicated by the sampling period indicator signal, and send the sampled pseudo data as the target to-be-calculated data to each switching unit 9203 in FIG. 9. Each switching unit 9203 is configured to send the target to-be-calculated data to the corresponding calculation unit 910 in FIG. 9.

Optionally, the sampling circuit 1010 may be electrically connected to the pseudo data source 150. If the target data source is the pseudo data source 150, the sampling circuit 1010 may further be electrically connected to each switching unit 9203.

Optionally, the control module 120 may determine the data sampling period for the pseudo data source 150, and send the sampling period indicator signal for indicating the determined data sampling period to the sampling circuit 1010. For a manner for determining the data sampling period, reference may be made to the foregoing relevant description, and details are not described herein. If the target data source is the pseudo data source 150, the sampling circuit 1010 may sample pseudo data according to the data sampling period, and send the sampled pseudo data to each switching unit 9203. In this way, the pseudo data may be provided to the corresponding calculation unit 910 through each switching unit 9203. As described above, by controlling the data sampling period, power consumption of a calculation array can be finely controlled, so that the power consumption of the calculation array can be effectively controlled according to actual requirements.

In some optional examples, a working process of the calculation circuit may be mainly divided into two stages, which respectively are a startup stage and an operation stage.

The startup stage corresponds to a process in which the calculation circuit is switched from idle to full load, and a warm-up strategy may be used at the startup stage. The warm-up strategy may include: (1) controlling the plurality of calculation units 910 in the calculation circuit to be started in batches; and (2) taking the pseudo data source 150 as the target data source.

A warm-keep strategy may be adopted at the operation stage. The warm-keep strategy may include: (1) for first full load after the plurality of calculation units 910 are started in batches, taking the pseudo data source 150 as the target source data if there is no data in the real data source 140 that can be supplied to the outside, and taking the real data source 140 as the target source data if there is the data in the real data source 140 that can be supplied to the outside; (2) if the calculation circuit is about to be switched from full load to waiting, taking the pseudo data source 150 as the target data source, and maintaining the startup state of the plurality of calculation units 910; (3) if the calculation circuit remains waiting, taking the pseudo data source 150 as the target data source, and maintaining the startup state of the plurality of calculation units 910; and (4) if the calculation circuit is about to be switched from waiting to full load, taking the real data source 140 as the target data source, and maintaining the startup state of the plurality of calculation units 910.

It should be noted that, similar to the foregoing strategy of starting in batches, if the calculation array needs to be switched from full load to idle, the plurality of calculation units 910 may be controlled to be turned off in batches.

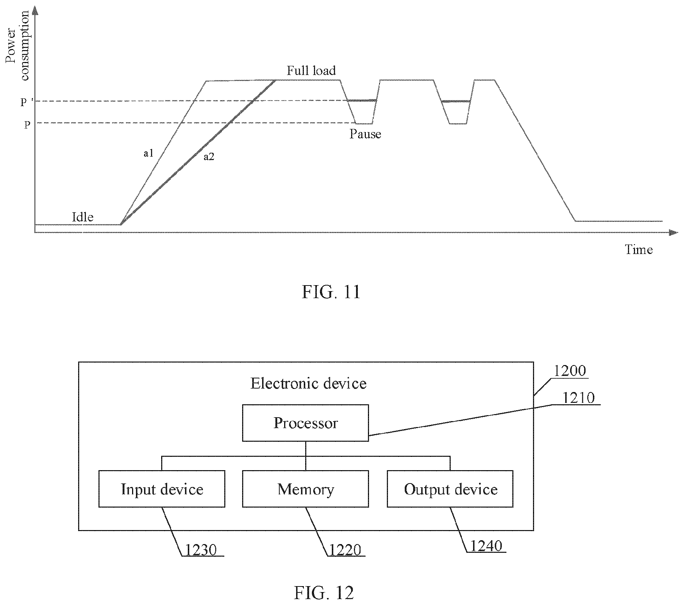

It should be noted that when the warm-up strategy is adopted, a slope for which the power consumption of the calculation circuit changes over time at the startup stage can be effectively controlled through control of a startup interval duration. For example, as shown in FIG. 11, if the startup interval duration is T, for the slope for which the power consumption of the calculation circuit changes over time, reference may be made to a slope of a solid line a1. If the startup interval duration is T' that is greater than T, for the slope for which the power consumption of the calculation circuit changes over time, reference may be made to a slope of a solid line a2. Obviously, the slope of the solid line a2 is smaller than that of the solid line a1. The power consumption of the calculation array may be controlled by adopting the warm-keep strategy. For example, referring to FIG. 11, if the data sampling period for the pseudo data source 150 is R, power consumption during waiting of the calculation circuit may be P. If the data sampling period for the pseudo data source 150 is R' that is less than R, the power consumption during waiting of the calculation circuit may be P'. Obviously, P' is greater than P.

In this way, drastically changes in the power consumption of the calculation array may be avoided by adopting the warm-up strategy and the warm-keep strategy. In addition, by adopting the warm-keep strategy, wastes of the power consumption may also be avoided as much as possible by controlling the power consumption of the computing array.

In view of the above, according to the embodiments of this disclosure, stability of the power consumption of the calculation circuit can be improved, and stability of a power source of a chip can be ensured, thereby ensuring reliability of the chip.

### Exemplary electronic device

FIG. 12 is a block diagram of an electronic device according to an embodiment of this disclosure. An electronic device 1200 includes one or more processors 1210 and a memory 1220.

The processor 1210 may be a central processing unit (CPU) or another form of processing unit having a data processing capability and/or an instruction execution capability, and may control another component in the electronic device 1200 to implement a desired function.

The memory 1220 may include one or more computer program products. The computer program product may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 1210 may execute one or more of the program instructions to implement the method for implementing a convolution operation through a calculation circuit according to various embodiments of this disclosure that are described above and/or other desired functions.

In an example, the electronic device 1200 may further include an input device 1230 and an output device 1240. These components are connected to each other through a bus system and/or another form of connection mechanism (not shown).

The input device 1230 may further include, for example, a keyboard and a mouse.

The output device 1240 may output various information to the outside, and may include, for example, a display, a speaker, a printer, a communication network, and a remote output device connected by the communication network.

Certainly, for simplicity, FIG. 12 shows only some of components in the electronic device 1200 that are related to this disclosure, and components such as a bus and an input/output interface are omitted. In addition, according to specific application situations, the electronic device 1200 may further include any other appropriate components.

### Exemplary computer program product and computer readable storage medium

In addition to the foregoing method and device, the embodiments of this disclosure may also relate to a computer program product, which includes computer program instructions. When the instructions are run by a processor, the processor is enabled to perform the steps, of the method according to the embodiments of this disclosure, that are described in the "exemplary method" part of this specification.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the method according to the embodiments of this disclosure, that are described in the "exemplary method" part of this specification.

The computer readable storage medium may be one readable medium or any combination of a plurality of readable media. The readable medium may be a readable signal medium or a readable storage medium. The readable storage medium may include, for example, but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. Specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A method for implementing a convolution operation through a calculation circuit, **characterized in that** the method comprises:
determining (210) a state type of the calculation circuit;
determining (220) a target data source based on the state type;
providing (230) target to-be-calculated data to the calculation circuit through the target data source;
controlling (240) a startup manner of the calculation circuit based on a control manner adapted to the state type; and
according to the startup manner, performing (250) a convolution operation on the target to-be-calculated data through the calculation circuit, to obtain an operation result.

2. The method according to claim 1, wherein the controlling (240) a startup manner of the calculation circuit based on a control manner adapted to the state type comprises:
in response to that the state type is a first preset type, determining a plurality of first calculation units that need to participate in the operation from the calculation circuit, and controlling the plurality of first calculation units to be started according to a preset mode; and
in response to that the state type is a second preset type, determining a plurality of second calculation units that need to participate in the operation from the calculation circuit, and controlling the plurality of second calculation units to remain in a startup state.

3. The method according to claim 2, wherein the controlling the plurality of first calculation units to be started according to a preset mode comprises:
determining (610) respective distribution position information of the plurality of first calculation units in the calculation circuit;
determining (620), based on the distribution position information, startup batches to which the plurality of first calculation units respectively belong;
determining (630) a startup interval duration between adjacent startup batches; and
starting (640) the plurality of first calculation units according to the startup batches to which the plurality of first calculation units respectively belong and the startup interval duration.

4. The method according to claim 3, wherein the determining a startup interval duration between adjacent startup batches comprises:
determining to-be-calculated data from a real data source (140);
determining task feature information of a calculation task to which the to-be-calculated data belongs; and
determining the startup interval duration between the adjacent startup batches based on the task feature information.

5. The method according to claim 1, wherein the determining a target data source based on the state type comprises:
in response to that the state type is a first preset type or a first preset subtype in a second preset type, taking a pseudo data source (150) as the target data source;
in response to that the state type is a second preset subtype in the second preset type, taking a real data source (140) as the target data source; and
in response to that the state type is a third preset subtype in the second preset type, determining a data supply state of the real data source (140), and selecting a data source adapted to the data supply state from the real data source (140) and the pseudo data source (150) to serve as the target data source.

6. The method according to claim 1, wherein the providing target to-be-calculated data to the calculation circuit through the target data source comprises:
in response to that the target data source is a pseudo data source (150), determining (710) a data sampling period for the pseudo data source (150); and
according to the data sampling period, sampling (720) pseudo data from the pseudo data source (150), and providing the sampled pseudo data as the target to-be-calculated data to the calculation circuit.

7. The method according to claim 6, wherein the determining a data sampling period for the pseudo data source (150) comprises:
determining to-be-calculated data from a real data source (140);
determining task feature information of a calculation task to which the to-be-calculated data belongs; and
determining the data sampling period for the pseudo data source (150) based on the task feature information.

8. The method according to any one of claims 1 to 7, further comprising:
discarding (810) an operation result obtained by the calculation circuit when the target data source is the pseudo data source (150); and
outputting (820) an operation result obtained by the calculation circuit when the target data source is the real data source (140) to a lower-level module of the calculation circuit.

9. The method according to claim 5, wherein the first preset subtype is a state type representing the switching from full load to waiting.

10. The method according to claim 5, wherein the second preset subtype is a state type representing the switching from waiting to full load.

11. The method according to claim 5, wherein the third preset subtype is a state type representing first full load after the idle ends.

12. An apparatus for implementing a convolution operation through a calculation circuit, **characterized in that** the apparatus comprises:
a calculation circuit (110), comprising a plurality of calculation units (910);
a plurality of processing modules (920), wherein each processing module corresponds to one of the calculation units (910) in the calculation circuit and comprises processing units (9201) and switching units (9203), each switching unit has a plurality of working modes, and in different working modes, the switching unit enables communication between different data sources to the corresponding calculation units (910); and
a control module (120), wherein the control module (120) is configured to determine a state type of the calculation circuit; determine a target data source based on the state type; and set, by using each processing unit, the corresponding switching unit to be in a target working mode of enabling communication between the target data source and the corresponding calculation unit, so as to provide target to-be-calculated data to the calculation circuit (110) through the target data source; the control module (120) is further configured to control, by using each processing unit, a startup manner of the calculation circuit based on a control manner adapted to the state type; and according to the startup manner, the calculation circuit is configured to perform a convolution operation on the target to-be-calculated data, to obtain an operation result.

13. The apparatus according to claim 12, further comprising:
a sampling circuit (1010), wherein the control module (120) is configured to send a sampling period indicator signal to the sampling circuit (1010); in response to that the target data source is a pseudo data source (150), the sampling circuit (1010) is configured to sample pseudo data from the pseudo data source (150) according to a data sampling period for the pseudo data source (150) that is indicated by the sampling period indicator signal, and send the sampled pseudo data as the target to-be-calculated data to each of the switching units; and each of switching units is configured to send the target to-be-calculated data to the corresponding calculation unit.

14. A computer readable storage medium, **characterized in that** the storage medium stores a computer program, and the computer program is used for implementing the method for implementing a convolution operation through a calculation circuit according to any one of claims 1 to 11.

15. An electronic device, **characterized in that** the electronic device comprises:
a processor; and
a memory, configured to store processor-executable instructions, wherein
the processor is configured to read the executable instruction from the memory, and execute the instructions to implement the method for implementing a convolution operation through a calculation circuit according to any one of claims 1 to 11.
